(19) Europäisches Patentamt

European Patent Office

Office européen des brevets

(11) Publication number: **0 376 640 B1**

(12) **EUROPEAN PATENT SPECIFICATION**

(45) Date of publication of patent specification: **23.02.94**

(51) Int. Cl.5: **C09J 123/02**, C09J 129/10, C09J 131/04, C09J 123/06, C09J 125/06, C09J 133/10, B32B 7/12, B32B 27/32

(21) Application number: **89313496.5**

(22) Date of filing: **22.12.89**

The file contains technical information submitted after the application was filed and not included in this specification

(54) **Poly(vinylalkylether)-containing hot-melt adhesives for polyethylene and polypropylene.**

(30) Priority: **30.12.88 US 292413**

(43) Date of publication of application:
**04.07.90 Bulletin 90/27**

(45) Publication of the grant of the patent:
**23.02.94 Bulletin 94/08**

(84) Designated Contracting States:
**AT BE CH DE ES FR GB IT LI NL SE**

(56) References cited:
**DE-A- 2 142 770**
**DE-A- 2 531 881**
**US-A- 2 970 974**

(73) Proprietor: **AMOCO CORPORATION**
**200 East Randolph Drive**
**Chicago Illinois 60601(US)**

(72) Inventor: **Kulzick, Matthew Albert**
**3 S 620 Melcher Avenue**
**Warrenville Illinois 60555(US)**
Inventor: **Pretzer, Wayne Robert**
**2 S 550 Seneca Drive**
**Wheaton Illinois 60187(US)**

(74) Representative: **Ritter, Stephen David et al**
**Mathys & Squire**
**10 Fleet Street**
**London EC4Y 1AY (GB)**

EP 0 376 640 B1

**Description**

This invention relates to improved hot-melt adhesive compositions effective in binding polyolefins to themselves and to other materials which are based upon a poly(vinylalkylether) and, more particularly, to hot-melt adhesive compositions which strongly bind polyolefins, in particular polyethylene, polypropylene, and ethylene-propylene copolymers, to themselves and other substrates, and which are formulated from a poly(vinylmethylether), at least 50 percent by weight of a thermoplastic resin, and, optionally, a tackifier resin.

Hot-melt adhesives produce a bond between two materials by cooling of the molten adhesive which is applied to the materials in a melted state. They are distinguishable from those products which require crosslinking or other chemical reactions to achieve ultimate bond strength and from those materials that require loss of solvent or water to achieve the bond strength. Prior to heating, the hot-melt adhesives are solids that can be provided in bulk or in pelletized or rod form for ease of handling. Upon heating, the hot-melt adhesive composition melts rather sharply and flows readily for application to a substrate. Since hot-melt adhesives are thermoplastic rather than thermosetting, and are thus remeltable, they can be applied to a first substrate and later remelted to form a hot-melt bond with a second substrate. Hot-melt adhesives can have considerable advantage over other types of adhesives for a number of uses and have a significant commercial importance.

There are a variety of uses for hot-melt adhesives which are out in the market place. However, while one hot-melt adhesive may be used for bonding in a particular use or application, the same adhesive may be completely unsuitable for other uses or applications. While many satisfactory hot-melt adhesives are available to the art, the art is constantly seeking new compositions having superior performance, lower cost, and/or stronger bonding of the substrate.

Polyethylene, polypropylene, and ethylene-propylene copolymers are widely used in many applications which require adhering these plastics to themselves, as well as to other materials. However, adhesives do not form strong bonds to untreated polyolefin surfaces. The difficulties encountered in developing adequate adhesion to polyethylene and polypropylene can be attributed in large part to the non-porous and non-polar characteristics of these materials. In addition, the presence of surface materials such as mold release agents, slip agents, antioxidants, polymerization impurities, and low-molecular-weight, surface polymer further deteriorates surface conditions for adhesion. Various surface preparation procedures, including etching with sodium dichromate-sulfuric acid solution, treating with flame, corona discharge, electron beam, laser light, ultraviolet radiation, hot chlorinated solvent, and applying chemically reactive primers have been developed to afford a polyolefin surface that is more receptive to conventional adhesives. However, such pretreatment adds significant cost to a finished assembly and can reduce the economic incentive to use polyethylene or polypropylene in place of more expensive plastics. Further, some surface treatment procedures, e.g., corona discharge, are only applicable to thin, flat surfaces and cannot be used in many existing applications.

An adhesive which strongly bonds untreated polyethylene, polypropylene, and ethylene-propylene copolymers would represent a significant achievement and present opportunities to not only market a new family of adhesives, but also open many new markets for such polyolefins in the areas of automobiles, appliances, fabrics, etc.

Compatibility of adhesive and substrate is critical if a strong bond is to be formed. An estimate of compatibility can be obtained from the solubility parameters ($\delta$) and critical surface tensions ($\gamma_c$) of the materials of interest. Generally, a good correlation exists between solubility parameter and surface tension for polymers. To form a strong bond, the adhesive should readily wet the surface of the substrate. Polyethylene and polypropylene have $\gamma_c$ values of 31 and 29 dynes/cm and $\delta$ values of 7.7-9.2 while typical adhesives have considerably higher values so little spreading and wetting occurs, giving poor adhesion with these adhesives.

In addition to wetting, the bond between adhesive and substrate will be strong if there is a decrease in the free energy as a result of combining the two. The free energy change will be negative if the heat of mixing, which is positive for most nonpolar and moderately polar pairs, is small. Since the square of the difference of the solubility parameters is proportional to the heat of mixing, it is highly desirable that the solubility parameters for adhesive and substrate be approximately equal.

It follows from the above that poly(vinylmethylether), PVME, is a potentially at ractive component in an adhesive formulated to bond to polyolefin surfaces. The critical surface tension of PVME is 29 dynes/cm and the solubility parameter is in the range 8.5-12.7. Comparison of these values with those of polyethylene and polypropylene given above suggests that PVME can wet the polyolefin surface and that the heat of mixing will be small. Both points suggest that PVME could be useful in polyolefin hot-melt adhesives to

2

form strong bonds between the polyolefin and various substrates.

Poly(vinylmethylether) also possesses several other interesting properties that are relevant to its use in adhesive formulations. While atactic, isotactic, and syndiotactic forms of the polymer are known, it is the atactic (amorphous) polymer that is of greatest interest in adhesives. This amorphous material is a very viscous resin (typical number average molecular weight in the neighborhood of 5,000-100,000) and it has a wide solubility range, e.g., it is soluble in water, as well as organic solvents like toluene. This property may be exploited by using PVME as a compatibilizing agent for dissimilar adhesive components. The hydrophilicity of PVME suggests that surface water and moisture should not significantly interfere with bonding. The presence of pendant, polar ether groups provides sites for favorable interaction with other adhesive components and polymer surfaces.

The literature describing the bonding of polyolefins is extensive. Substrate surface treatment and adhesive formulation are the two general approaches the patent literature has taken to improve adherence. In the latter art both hot-melt and pressure-sensitive adhesives are taught. The literature teaching the use of poly(vinylalkylether) as an adhesive component is also broad. For example, a hot-melt adhesive containing poly(vinylmethylether) used to laminate such materials as Kraft paper, burlap, cellophane, cellulose, glass, iron and tin is taught in U.S. Patent No. 2,970,974.

Conventional adhesives that contain a pitch and a poly(vinylalkylether) fluidized by a solvent, which are considered to operate synergistically, are taught as useful to bind polyolefins in U.S. Patent No. 3,409,498. The patent further relates that although a broad range of pitch sources produce a suitable adhesive "Asphalts and other bituminous substances do not produce the same adhesive effects . . .", which quotation appears at column 3, lines 15-17. Poly(vinylmethylether) is specifically taught as useful in the patent.

Now it has been found that by combining poly(vinylmethylether) with a thermoplastic resin and, optionally, a tackifier resin, hot-melt adhesives for polyethylene, polypropylene, and ethylene-propylene copolymers can be formed which bond these substrates strongly and in which the adhesive strength of the bond between adhesive and substrate is generally greater than the cohesive strength of the adhesive.

## Brief Description of the Invention

Described herein are hot-melt adhesive compositions useful for binding polyolefins comprising substantially amorphous poly(vinylmethylether) and at least 50 percent by weight of a thermoplastic resin selected from the group consisting of $C_2$ to $C_6$ polyolefins and copolymers thereof, an ethylene-vinylacetate copolymer, low density polyethylene, polystyrene, and ethylene-alkylacrylate copolymers. In another aspect of the invention, such hot-melt adhesive compositions contain in addition a tackifier resin selected from the group consisting of terpene resins, terpene-phenol resins, coumarone-indene resins, aliphatic and aromatic petroleum resins, hydrogenated petroleum resins, resins made by copolymerization of pure aromatic monomers, a wood rosin and wood rosin esters. In still another aspect, the invention includes structures comprising such hot-melt adhesives and a solid substrate selected from the group consisting of high density polyethylene, low density polyethylene, polypropylene, ethylene-propylene copolymers, polymethylpentene, polycarbonate, latex-backed carpet, polyethylene-backed carpet, high impact polystyrene, galvanized steel, carbon steel, poly(2,6-dimethylphenylene oxide) and blends thereof with polystyrene, and a copolymer of acrylonitrile, butadiene and styrene.

## Detailed Description of the Invention

The hot-melt adhesives of this invention contain at least two components. The first component is a poly(vinylalkylether), preferably a poly(vinylmethylether), and more particularly, a substantially amorphous poly(vinylmethylether), and the second component is a thermoplastic resin selected from the group consisting of $C_2$ to $C_6$ polyolefins and copolymers thereof, such as the amorphous polypropylene Polytac R-1000 made by Crowley Chemical Co., an ethylene-vinylacetate copolymer such as an Ultrathene made by U.S. Industries, Inc., a low density polyethylene such as a Petrothene made by U.S. Industries, Inc., polystyrene, and an ethylene-alkylacrylate copolymer such as a DPD series ethylene-ethylacrylate copolymer made by Union Carbide Co. More preferably, the second component is selected from the group containing amorphous polypropylene such as Polytac R-1000 made by Crowley Chemical Co. to which is added less than about 15 weight percent of crystalline polypropylene and an ethylene-vinylacetate copolymer such as an Ultrathene made by U.S. Industries, Inc. Preferably, the amount of thermoplastic resin is at least 50 percent by weight of the total adhesive composition, more preferably, more than 60 percent by weight and, most preferably, more than 65 percent by weight of the total adhesive composition.

Usefully, the hot-melt adhesive contains a third component which is a tackifier resin. In the three component hot-melt adhesives, the percentage by weight of the thermoplastic resin in the total adhesive is at least about 50 percent, more preferably, at least 60 percent, and most preferably, at least 65 percent. The amount of tackifier resin as a percent of the total adhesive is at least 5 weight percent of the total adhesive composition, more preferably, at least 10 weight percent, and most preferably, at least 20 weight percent of the total adhesive composition. The amount of poly(vinylmethylether) in the hot-melt adhesive is at least 10 weight percent of the total adhesive composition, and more preferably, at least 15 percent of the total adhesive composition.

The poly(vinylalkylethers) which may be employed are polymers which are liquids or semi-solid; at room temperature, and are characterized by having an inherent viscosity within the range of 0.2 to 3.0. Preferred is a poly(vinylmethylether) such as Gantrez M-154 which is purchasable from GAF, Inc.

The compositions of this invention comprise, on the one hand, a poly(vinylalkylether) in combination with a thermoplastic resin and, on the other hand, additionally contain a tackifier resin selected from the group consisting of terpene resins, terpene-phenol resins, coumarone-indene resins, aliphatic and aromatic petroleum resins, hydrogenated petroleum resins, resins made by copolymerization of pure aromatic monomers, the naturally occurring gum and wood rosins, and their synthetic derivatives such as esters. The tackifier resin according to the present invention advantageously imparts hot tack, substrate wetting and bond strength to the substrate while the hot-melt composition is being applied to the substrate.

The tackifier resins contemplated in the present invention are solid compounds having a softening point above 75°C. Included within this category of materials are the following substances with their approximate softening points (by the ring and ball method):

|  | °C |
|---|---|
| Wood rosin | 80 |
| Gum rosin | 83 |
| Rosin esters derived from either gum or wood rosin such as: |  |
|     Glycerol esters (ester gums) | 90 |
|     Pentaerythritol esters | 115 |
| Hydrogenated rosin | 75 |
| Polymerized rosin | 100 |
| Disproportionated rosin | 80 |
| Polyhydric alcohol derivatives of hydrogenated rosin, e.g.: |  |
|     Glycerol derivatives | 85 |
| Polyhydro alcohol derivatives of polymerized rosin, e.g.: |  |
|     Ethylene glycol ester | 82 |
|     Glycerol ester | 110 |
| Oxidized rosins | 105 |
| Hydrogenated oxidized rosin esters of oxidized rosin and the like. |  |

Any of the common commercial grades of wood or gum rosin may be employed ranging from the "X" and water white grades to the darkest grades (e.g., D-grade), the impurities in the latter giving rise to the color body formation being insignificant in their effect upon the usefulness of the compositions of this invention.

The tackifier resin is advantageously an alpha-methylstyrene, a rosin, or a terpene resin of the alpha-pinene, beta-pinene and d-limonene types. Preferably, the tackifying resin has a ring and ball softening point of 110° to 150°C, more preferably 110° to 135°C, a Gardener color of 2 to 10 and a flashpoint greater than 230°C.

A preferred alpha-methylstyrene tackifier resin of the present invention is commercially available under the trademark "Kristalex 1120." "Kristalex 1120" is a water white, color stable, nonpolar, thermoplastic hydrocarbon resin that is a copolymer of styrene and alpha-methylstyrene, and has a ring and ball softening point of 120°C, a specific gravity of 1.07 and a flashpoint of 232°C.

A preferred rosin type tackifier resin, commercially available under the trademark "Sylvatac 140," is a polymerized rosin with a ring and ball softening point of 140°C, a Gardner color of 10, an acid number of 135, a saponification number of 140 and a specific gravity of 1.08.

Suitable hydrocarbon tackifier resins can be a hydrocarbon resin such as DAC-B hydrocarbon resin prepared according to the process disclosed in U.S. Pat. No. 3,701,760 as well as other hydrocarbon resins, polyterpenes or synthetic polyterpenes, and the like. One such hydrocarbon tackifying resin is a hydrocarbon resin having a softening point of about 100°C and available commercially as Eastotac H-100 from Eastman Chemical Products, Inc. Other hydrocarbon tackifying resins can be prepared by the polymerization of monomers consisting primarily of olefins and diolefins and include, for example, the residual by-product monomers resulting from the manufacture of isoprene. These hydrocarbon tackifier resins typically exhibit a ring and ball softening point of from 80°C to 135°C; an acid number of from 0-2, a saponification value of less than 1; and an iodine value of from 30 to 100. Examples of such commercially available resins of this type are "Wingtack" 95 and "Wingtack" 115 tackifying resins sold by the Goodyear Tire and Rubber Company, the Sta-Tac and Betaprene A or H resins sold by the Reichold Chemical Corporation, Arkon resins sold by Arakawa Forest Chemical Industries, and Escorez resins sold by Exxon Chemical Co.

Also suitable resins are the terpene polymers such as the polymeric, resinous materials obtained by polymerization and/or copolymerization of terpene hydrocarbons such as the alicyclic, monocyclic, and bicyclic monoterpenes and their mixtures, including allo-ocimene, carene, isomerized pinene, pinene, dipentene, terpinene, terpinolene, limonene, turpentine, a terpene cut or fraction, and various other terpenes. Particularly useful starting materials are terpene mixtures containing at least 20 percent beta-pinene and/or limonene or dipentene (racemic limonene), and the "sulfate turpentine" obtained as a by-product in the sulfate pulping process. Commercially available resins of the terpene type include the Zonarez terpene B-Series, the 7000 Series resins from Arizona Chemical Corp., and Nirez resins from Reichold Chemical Corp. Typical properties reported for the Zonarez terpene resins include ring and ball softening point of about 55° to 125°C (ASTM E-28-67), color of 2 to 3 (Gardner 1963, 50% in heptane), acid number of less than 1 (ASTM D465-59), saponification number of less than 1 (ASTM D464-59), and specific gravity at 25°C of 0.96 to 0.99 (ASTM D1963-61).

By virtue, therefore, of the combination of the poly(vinylmethylether) with the hydrocarbon and tackifier resins, it is possible to provide hot-melt adhesive compositions which give excellent adhesive bonds quickly, which bonds are not subject to deterioration when exposed to conditions of high humidity or water immersion or the like.

Other ingredients may be included in the hot-melt composition according to the present invention.

For example, a silane adhesion promoter can be advantageously included. A polyunsaturated polyalkoxysilane, 50% in siloxane, is commercially available under the trademark "CPS078 6S". Other silanes may also be used as adhesion promoters.

Anionic and nonionic wetting agents that are stable at normal hot-melt application temperatures may also be used. An example of a suitable wetting agent is sodium dioctyl sulfosuccinate.

An antioxidant is also advantageously included to control the aging of the composition. A preferred antioxidant is the 3,5-di-tert-butyl-4-hydroxyhydrocinamic acid triester of 1,3,5-tris-(2-hydroxyethyl)-s-triazine-2,4,6-(1H,3H,5H)trione with a molecular weight of 1042 commercially available under the trademark "Vanox SKT." Antioxidants that are also effective include, for example, tris(di-t-butyl-p-hydroxybenzyl)-trimethylbenzene (Lonox 330), alkylated bisphenol (Naugawhite), zinc dibutyl dithiocarbamate (Butyl Zimate), and 4,4'-methylene bis(2,6-di-tert-butylphenol) (Ethyl 702), tetrakis[methylene(3,5-di-tert-butyl-4-hydroxyhydrocinnamate)-methane] (Irganox 1010), lauryl stearyl thiodipropionate (Plastanox 1212), and dilauryl 3,3'-thiodipropionate (Plastanox LTDP), 2,6-di-tert-butyl-p-cresol (BHT) and the like.

Additives such as nucleating agents, pigments, colorants, fillers, solvents, and the like can also be added to the adhesive compositions of the present invention.

An effective amount of crystalline polypropylene, for example, up to 15 weight percent of the amorphous polypropylene may be included in the thermoplastic resin portion of the hot-melt composition to improve the cohesive properties of hot-melts made using amorphous polypropylene.

The adhesive compositions of this invention are prepared by blending together the adhesive components in the melt at a temperature of 160°C. to 200°C. until a homogeneous mixture is obtained. Various methods of blending materials of this type are known to the art and any method that produces a homogeneous mixture is satisfactory. These components blend easily in the melt and a heated vessel equipped with a stirrer is all that is required. For example, a Cowles stirrer provides effective mixing for preparing these compositions. Solvents such as hexane, heptane, mineral spirits, xylene, toluene, benzene, chlorinated hydrocarbons, etc., are not needed to prepare the compositions of this invention; however, they can be used if desired.

The adhesive compositions of this invention, which are essentially 100 percent solids, have a melt viscosity in the range of about 100 to about 150,000 centipoise at 177°C.

The hot-melt adhesives of this invention can be used for any use to which hot-melt adhesives have been put as can be understood by one skilled in the art. In particular, the inventive compositions are able to strongly bond polyolefins and their copolymers, preferred polyolefins are polyethylene, polypropylene, and ethylene-propylene copolymers, to themselves and to other substrates such that failure of the interfacial bond is generally cohesive rather than interfacial. Substrates which are useful to bond the polyolefin or polyolefin copolymer include high density polyethylene, low density polyethylene, polypropylene, ethylene-propylene copolymers, polymethylpentene, polycarbonate, latex-backed carpet, polyethylene-backed carpet, high impact polystyrene, galvanized steel, carbon steel, poly(2,6-dimethylphenylene oxide) and blends thereof with polystyrene a copolymer of acrylonitrile, butadiene, and styrene and the like. More preferably, substrates such as high density and low density polyethylene, polypropylene, ethylene-propylene copolymer, polycarbonate, latex-backed carpet and polyethylene-backed carpet are used.

The following Examples will serve to illustrate certain specific embodiments of the hereindisclosed invention.

Examples

General

Adhesive Strength Testing

Lap shear strength was measured by a test based upon ASTM D-1002-72. Lap shear assemblies were prepared from two 1 in x 6 in x 1/8 in strips of specified substrate (e.g., polypropylene, polyethylene, high impact polystyrene, etc.). The assembly was prepared by dispensing hot-melt adhesive from an appropriate applicator onto the end of one test strip and then overlapping a second strip on top of the first. The area of overlap is one square inch. A 5 lb weight was immediately rolled twice over the bonded joint. Spacers or a jig are used to set the bond thickness.

Lap shear strength was measured by a tensile test machine, such as an Instron Model 4201 using a tension load cell of 1000 lbs and a crosshead speed of 2 in/min.

Experimental Adhesive Formulation

A representative hot-melt formulation is listed below and was prepared in the following manner:

50 g poly(vinylmethylether) (Gantrez M-154, 50% water)
25 g polyterpene (Zonarez B-115)
50 g ethylene-vinylacetate (USI UE 612-04, melt index of 150)

The poly(vinylmethylether) (PVME) was first weighed into a 500 ml resin kettle and then the remaining components were added. The kettle was placed overnight in an oven set at 105-115°C. The oven had a nitrogen purge allowing the water vapor from the PVME to be removed. The next day the kettle was removed from the oven and cooled to room temperature under a blanket of nitrogen. When cooled, the kettle was equipped with a cover, stirring shaft, paddle, Truebore bearing, mechanical stirrer and a nitrogen purge. The kettle was put into a silicone oil bath that was controlled by a TIC and TIS control box at 175°C. Stirring began when the formulation softened. If a formulation did not blend well, the temperature was raised to 200°C. Once the formulation was completely blended, the kettle was raised out of the oil bath and tilted to one side causing the formulation to flow slowly along the side of the kettle. When the formulation cooled, it was then removed from the kettle.

Adhesives Application to Polypropylene Strips

A small amount of the hot-melt formulation was placed in a Mini-Squirt hot-melt glue gun (Slautterback Corporation Model 71026). The gun was heated to 200°C. Using polypropylene sticks wiped once with hexane, the hot-melt was added to a 1 inch square area of the bottom strip. Then the top strip was placed on top of the hot-melt area and pressed in place with a 5 kg weight. The thickness of the hot-melt was determined by the size of the spacer used. The bonded strips were cooled for a few minutes before the weight was removed. The strips were cured overnight at room temperature.

Example 1

Various hot-melt adhesives were made by hot mixing 25 weight percent of Gantrez M-154, an amorphous poly(vinylmethylether) purchased from GAF, Inc., 50 percent by weight of base resin, and 25 weight percent of Zonarez B-115, a tackifier resin purchased from Arizona Chemical Co. The results of lap shear strength tests on structures formed by bonding two 1 in x 6 in x 1/8 in polypropylene strips treated with the hot-melt adhesives is shown below.

Table 1

| Base Resin | Lap shear strength (psi) | Failure Mode |
|---|---|---|
| EVA[1] | 221 | C[2] |
| LDPE[3] | 257 | C |
| Amorphous polypropylene[4] | 197 | C |
| Ethylene-ethylacrylate copolymer[5] | 130 | C |
| Polystyrene[6] | 112 | C |

[1] Ethylene-vinylacetate USI UE 614-04 Ultrathene (18% vinylacetate, 150 melt index) purchased from U.S. Industries, Inc.
[2] Cohesive bond failure
[3] USI Petrothene NA 596, 150 melt index purchased from U.S. Industries, Inc.
[4] Polytac R-1000 purchased from Crowley Chemical Co.
[5] UCC DPD9169 (19% ethylacrylate, 20 melt index) purchased from Union Carbide Corp.
[6] Supplied by Amoco Chemical Co.

Comparative Example 2

Hot-melt adhesives from 50 weight percent ethylene-vinylacetate, Ultrathene USI 612-04 (18% vinyl acetate, 150 melt index), 25 weight percent of three different poly(vinylalkylether)s, and 25 weight percent of the polyterpene Zonarez B-115 were made by hot mixing. Their adhesive properties are set out in Table 2 below.

Table 2

| Effect of Change in Vinylether Polymer Type | | |
|---|---|---|
| Vinylether Polymer | Lap Shear Strength (psi) | Failure Mode |
| Poly(vinylmethylether) | 221 | C |
| Poly(vinylethylether) | 57 | C |
| Poly(vinylisobutylether) | 281 | I[1] |

[1] Interfacial bond failure

7

Example 3

Hot-melt adhesives from 25 weight percent Gantrez M-154 poly(vinylmethylether), 50 weight percent of low density polyethylene (USI Petrothene NA 596 150, melt index) and 25 weight percent of several tackifier resins were made by hot mixing. Their adhesive properties are set out in Table 3 below.

Table 3

| Tackifier Resin | Type | Lap Shear Strength (psi) | Failure Mode |
|---|---|---|---|
| Zonarez B-115[1] | Poly($\beta$-pinene) | 256 | C |
| Zonarez B-125[1] | Poly($\beta$-pinene) | 282 | C |
| Zonester 100[1] | Tall Oil Rosin Ester | 137 | C |
| Nevtac 115[2] | Synthetic Polyterpene Resin | 217 | C |
| Nevex 100[2] | Petroleum Hydrocarbon Resin | 100 | C |

[1] Made by Arizona Chemical Co.
[2] Made by Neville Chemical Co.

Example 4

Hot-melt adhesives from 25 weight percent Gantrez M-154 poly(vinylmethylether), 50 weight percent of USI UE614-04 Ultrathene, ethylene-vinylacetate, and 25 weight percent of several tackifier resins were made by hot mixing. Their adhesive properties are set out in Table 4 below.

Table 4

| Tackifier Resin | Type | Lap Shear Strength (psi) | Failure Mode |
|---|---|---|---|
| Zonarez B-115 | Poly($\beta$-pinene) | 221 | C |
| Zonarez B-125 | Poly($\beta$-pinene) | 275 | C |
| Zonester 100 | Tall Oil Rosin Ester | 192 | C |
| Nevtac 115 | Synthetic Polyterpene Resin | 150 | C |
| Nevex 100 | Petroleum Hydrocarbon Resin | 193 | I |

Example 5

The effect of changing ethylene-vinylacetate (EVA) percentages and poly(vinylmethylether) (PVME) percentage was evaluated in this Example. No tackifier resin was used. The test data is shown below in Table 5 below.

Table 5

| % PVME[1] | % EVA[2] | % VA[3] in the EVA | EVA MI[4] | Lap Shear Strength (psi) | Failure Mode |
|---|---|---|---|---|---|
| 0 | 100 | 28 | 388 | 129 | I |
| 20 | 80 | 28 | 388 | 145 | I |
| 33 | 67 | 28 | 388 | 201 | C |
| 50 | 50 | 28 | 388 | 38 | C |
| 0 | 100 | 18 | 150 | 108 | I |
| 25 | 75 | 18 | 150 | 282 | C |
| 25 | 75 | 18 | 530 | 229 | C |

[1] Gantrez M-154
[2] A USI Ultrathene
[3] VA is vinyl acetate
[4] MI is melt index

Example 6

The effect of changing the PVME and tackifier resin percentages for hot-melt adhesives containing amorphous polypropylene was evaluated. The data is shown in Table 6 below.

Table 6

| % PVME[1] | % Polyterpene[2] | % Amorphous PP | Lap Shear Strength (psi) | Failure Mode |
|---|---|---|---|---|
| 25 | 25 | 50 | 197 | C |
| 35 | 15 | 50 | 64 | C |
| 30 | 30 | 40 | 160 | C |
| 35 | -- | 65 | 69 | C |
| 30 | -- | 70 | 74 | C |

[1] Gantrez M-154
[2] Zonarez B-115

Example 7

The effect of changing the EVA percentage in a hot-melt adhesive made from 25 weight percent Gantrez M-154 PVME, 50 weight percent of a USI Ultrathene EVA, and 25 weight percent Zonarez B-115 tackifier resin is shown in Table 7 below.

Table 7

| % EVA in Adhesive | % VA in EVA | Melt Index | Lap Shear Strength (psi) | Failure Mode |
|---|---|---|---|---|
| 50 | 18 | 150 | 221 | C |
| 50 | 28 | 150 | 121 | C |
| 50 | 19 | 32 | 112 | C |
| 40[1] | 18 | 150 | 242 | C |
| 10 | 19 | 2.5 | | |
| 30[1] | 18 | 150 | 108 | I/C |
| 20 | 19 | 2.5 | | |
| 30[1] | 18 | 150 | 119 | C |
| 20 | 19 | 32 | | |
| 30[1] | 18 | 530 | 202 | C |
| 20 | 19 | 2.5 | | |

[1] Two different EVAs with the tabulated properties were used for each hot-melt adhesive made in this preparation.

Example 8

Several different hot-melt adhesives were made by hot mixing and used to bond latex-backed carpet to a polypropylene (PP) substrate. The test results on adhesive strength are shown below in Table 8.

Table 8

| Adhesive Composition | Load at Failure (psi) | Comments |
|---|---|---|
| 25% PVME/25% Polyterpene[1] 50% Amorphous PP (Polytac R-1000)[2] | 54 | Carpet[3] Failed Before Bond |
| 25% PVME/25% Polyterpene 50% Amorphous PP (Polytac R-1000) | 56[4] | Carpet Failed Before Bond |
| 25% PVME/25% Polyterpene 50% Amorphous PP (Polytac R-500)[2] | 38 | Cohesive Bond Failure |
| 30% PVME 70% Amorphous PP (Polytac R-1000) | 39 | Cohesive Bond Failure |
| 35% PVME 65% Amorphous PP (Polytac R-1000) | 42 | Cohesive Bond Failure |

[1] Zonarez B-115
[2] Polytac R-1000 and R-500 are amorphous polypropylenes supplied by Crowley Chemical Co.
[3] The latex-bonded carpet substrate was supplied by Chrysler Corp.
[4] Structure aged 1 week at 175°F under a 0.11 psi load.

Comparative Example 9

A hot-melt adhesive using 50 weight percent amorphous polypropylene (Polytac R-1000), 25 weight percent PVME, and 25 weight percent Zonarez B-115 tackifier resin was made by hot mixing and used to bond polyethylene-backed carpet made by Magee Carpet Co. to a polypropylene (PP) substrate. The test results together with results using two commercial hot-melt adhesives are shown in Table 9 below.

EP 0 376 640 B1

Table 9

| Adhesive Composition | Load at Failure (psi) | Comments |
|---|---|---|
| 25% PVME/25% Polyterpene 50% Amorphous PP | 40 | PE Backing Failed 3 Times More Frequently Than The Adhesive Bond |
| 100% Amorphous PP[1] Polyolefin Base[2] | 33 37 | Interfacial Bond Failure Interfacial Bond Failure |

[1] This amorphous polypropylene supplied by Baychem International, Inc. as K-TAC 200A.

[2] Jetmelt 3797, a polyolefin-based commercial hot-melt adhesive supplied by 3M.

## Claims

1. A hot-melt adhesive composition useful for binding polyethylene, polypropylene, and ethylene-propylene copolymers said hot-melt adhesive composition comprising
   (i) substantially amorphous poly(vinylmethylether), and
   (ii) at least 50 per cent by weight of a thermoplastic resin selected from amorphous $C_2$ to $C_6$ polyolefins and copolymers thereof, ethylene-vinylacetate copolymers, low density polyethylene, polystyrene, and ethylene-alkylacrylate copolymers, and optionally
   (iii) a tackifier resin selected from terpene resins, terpene-phenol resins, coumarone-indene resins, aliphatic and aromatic petroleum resins, hydrogenated petroleum resins, resins made by copolymerisation of pure aromatic monomers, a wood rosin, and wood rosin esters.

2. A composition according to Claim 1 having a melt viscosity of 0.1 Pa s (100 centipoise) to 150 Pa s (150,000 centipoise) at 177°C.

3. A composition according to Claim 1 or 2 comprising a tackifier resin and at least 10 weight percent poly (vinylmethylether).

4. A composition according to any preceding claim comprising at least 5 weight percent tackifier resin.

5. A composition according to any preceding claim in which the tackifier resin has a softening point of 75°C or above.

6. A composition according to any preceding claim wherein said tackifier resin is a polyterpene.

7. A composition according to any preceding claim wherein said thermoplastic resin comprises amorphous, polypropylene.

8. A composition according to Claim 7 wherein said amorphous polypropylene contains up to 15 weight per cent of crystalline polypropylene.

9. A composition according to any of Claims 1 to 6 wherein said thermoplastic resin is an ethylene-vinylacetate copolymer.

10. Use of a composition according to any preceding claim as a hot melt adhesive in combination with a solid substrate selected from high density polyethylene, low density polyethylene, polypropylene, ethylene-propylene copolymers, polymethylpentene, polycarbonate, latex-backed carpet, polyethylene-backed carpet, high impact polystyrene, galvanized steel, carbon steel, poly(2,6-dimethylphenylene oxide) and blends thereof with polystyrene, and a copolymer of acrylonitrile, butadiene and styrene.

11

**Patentansprüche**

1. Heißschmelzklebstoffzusammensetzung, geeignet zum Verbinden von Polyethylen-, Polypropylen- und Ethylen-Propylen-Copolymeren, wobei die Heißschmelzklebstoffzusammensetzung umfaßt:

(i) im wesentlichen amorphen Poly(vinylmethylether) und

(ii) wenigstens 50 Gew.-% eines thermoplastischen Harzes, ausgewählt aus amorphen $C_2$- bis $C_6$-Polyolefinen und Copolymeren von diesen, Ethylen-Vinylacetat-Copolymeren, Polyethylen mit niedriger Dichte, Polystyrol und Ethylenalkylacrylat-Copolymeren, und gegebenenfalls

(iii) ein klebrigmachendes Harz, ausgewählt aus Terpenharzen, Terpen-Phenol-Harzen, Kumaron-Indenharzen, aliphatischen und aromatischen Petroleumharzen, hydrierten Petroleumharzen, durch Copolymerisation von reinen aromatischen Monomeren hergestellten Harzen, Colophonium und Colophoniumestern.

2. Zusammensetzung nach Anspruch 1, die eine Schmelzviskosität von 0,1 Pa s (100 Centipoise) bis 150 Pa s (150.000 Centipoise) bei 177° C aufweist.

3. Zusammensetzung nach Anspruch 1 oder 2, die ein klebrigmachendes Harz und mindestens 10 Gew.-% Poly(vinylmethylether) umfaßt.

4. Zusammensetzung nach einem der vorhergehenden Ansprüche, die wenigstens 5 Gew.-% klebrigmachendes Harz umfaßt.

5. Zusammensetzung nach einem der vorhergehenden Ansprüche, worin das klebrigmachende Harz einen Erweichungspunkt von 75° C oder darüber aufweist.

6. Zusammensetzung nach einem der vorhergehenden Ansprüche, worin das klebrigmachende Harz ein Polyterpen ist.

7. Zusammensetzung nach einem der vorhergehenden Ansprüche, worin das genannte thermoplastische Harz amorphes Polypropylen umfaßt.

8. Zusammensetzung nach Anspruch 7, worin das genannte amorphe Polypropylen bis zu 15 Gew.-% kristallines Polypropylen enthält.

9. Zusammensetzung nach einem der Ansprüche 1 bis 6, worin das genannte thermoplastische Harz ein Ethylen-Vinylacetat-Colpolymer ist.

10. Verwendung einer Zusammensetzung nach einem der vorhergehenden Ansprüche als Heißschmelzklebstoff in Kombination mit einem festen Substrat, ausgewählt aus Polyethylen mit hoher Dichte, Polyethylen mit niedriger Dichte, Polypropylen, Ethylen-Propylen-Copolymeren, Polymethylpenten, Polycarbonat, Latex-unterlegtem Teppich, Polyethylenunterlegtem Teppich, Polystyrol mit hoher Schlagfestigkeit, galvanisiertem Stahl, Flußstahl, Poly(2,6-dimethylphenylenoxid) und Mischungen von diesen mit Polystyrol, und einem Copolymer aus Acrylnitril, Butadien und Styrol.

**Revendications**

1. Formulation adhésive à fusion servant pour la liaison de polyéthylène, polypropylène et copolymère éthylène/propylène, ladite formulation adhésive à fusion comprenant

(i) un poly(vinylméthyléther) essentiellement amorphe, et

(ii) au moins 50 pour cent en poids d'une résine thermoplastique sélectionnée parmi des polyoléfines amorphes $C^2$ à $C^6$ et leurs copolymères, des copolymères éthylène/acétate de vinyle, du polyéthylène faible densité, du polystyrène et des copolymères éthylène-acrylate d'alkyle, et éventuellement

(iii) une résine adhésive sélectionnée parmi des résines terpéniques, des résines terpéniques/phénoliques, des résines coumarone-indène, des résines de pétrole aliphatiques et aromatiques, des résines de pétrole hydrogénées, des résines réalisées par copolymérisation de purs monomères aromatiques, une résine de colophane et des esters de résine de colophane.

**2.** Formulation conforme à la revendication 1 avec une viscosité de fusion comprise entre 0,1 Pa s (100 centipoises) et 150 Pa s (150.000 centipoises) à 177°C.

**3.** Formulation conforme à la revendication 1 ou 2 comprenant une résine adhésive et au moins 10 pour cent en poids de poly(vinylméthyléther).

**4.** Formulation conforme à l'une des revendications précédentes comprenant au moins 5 pour cent en poids de résine adhésive.

**5.** Formulation conforme à l'une des revendications précédentes dans laquelle la résine adhésive présente un point de ramollissement supérieur ou égal à 75°C.

**6.** Formulation conforme à l'une des revendications précédentes dans laquelle la résine adhésive est un polyterpène.

**7.** Formulation conforme à l'une des revendications précédentes dans laquelle la résine thermoplastique comprend un polypropylène amorphe.

**8.** Formulation conforme à la revendication 7 selon laquelle le polypropylène amorphe contient jusqu'à 15 pour cent en poids de polypropylène cristallin.

**9.** Formulation conforme à l'une des revendications 1 à 6 où ladite résine thermoplastique est un copolymère éthylène/acétate de vinyle.

**10.** Utilisation d'une formulation conforme à l'une des revendications précédentes comme adhésif à fusion en combinaison avec un substrat solide sélectionné parmi le polyéthylène haute densité, le polyéthylène faible densité, le polypropylène, les copolymères éthylène/ propylène, le polyméthylpentène, le polycarbonate, les tapis à support latex, les tapis à support polyléthylène, le polystyrène résistant aux impacts, l'acier galvanisé, l'acier au carbone, le poly(oxyde de 2,6-diméthylphénylène) et leurs combinaisons avec le polystyrène et un copolymère d'acrylnitrile, butadiène et styrène.